# EUROPÄISCHE PATENTSCHRIFT

(11) **EP 2 072 958 B1**
(45) Veröffentlichungstag und Bekanntmachung des Hinweises auf die Patenterteilung: **07.06.2017**
(21) Anmeldenummer: 07024842.2
(22) Anmeldetag: 20.12.2007
(51) Int. Cl.: G01D 4/00, H04Q 9/00

(54) **Verfahren und System für Tarif-, Last- und Zählerdatenmanagement mit Funk-Rundsteuerung**
Method and system for tariff, load and meter data management with radio round control
Procédé et système de gestion de données de tarif, de charge et de compteur avec télécommande hertzienne

(43) Veröffentlichungstag der Anmeldung: 24.06.2009
(73) Patentinhaber: EFR Europaische Funk-Rundsteuerung GmbH, 80335 München (DE)
(72) Erfinder: Wienold, Heinrich, 80469 München (DE); Bicker, Roland, 85221 Dachau (DE); Gabriel, Rupprecht, 33813 Örlinghausen (DE)
(74) Vertreter: Manitz Finsterwald Patentanwälte PartmbB

(56) Entgegenhaltungen:
- WO-A-02/37227
- WO-A-03/084278
- DE-A1-102004 053 709
- US-B1- 6 954 144

## Beschreibung

Die vorliegende Erfindung betrifft ein Verfahren zum Managen einer Vielzahl von dezentralen Kunden-Endgeräten mittels einer bidirektionalen Kommunikationsverbindung zwischen einer Zentraleinheit und den Kunden-Endgeräten zugeordneten Kunden-Verbindungseinheiten.

In verschiedenen Gebieten der Technik ist es notwendig, von einer zentralen Einrichtung aus Steuersignale an eine Vielzahl von dezentral verteilten Kunden-Endgeräten zu übermitteln. Im Bereich der Energieversorgung kann z.B. ein Last- oder Tarifmanagement durchgeführt werden, indem Steuersignale zur Tarifumstellung oder Abschaltung an bestimmte Endgeräte gesendet werden. Dies kann beispielsweise mittels Datenübertragung über das Stromnetz (Powerline Communication, PLC) erfolgen. Auch das Verfahren der langwellenbasierten Funk-Rundsteuerung, welches beispielsweise in der EP 1 479 260 B1 beschrieben ist, kann zu diesem Zweck eingesetzt werden. Bei einer durchzuführenden Tarifumstellung für alle Kunden-Endgeräte oder eine Untergruppe von diesen bzw. bei einer Zu- oder Abschaltung einzelner mit den Endgeräten verbundener Einrichtungen im Rahmen eines Lastmanagements ist es erforderlich, dass die entsprechenden Steueranweisungen in relativ kurzer Zeit, beispielsweise im Bereich unter zehn Sekunden, umgesetzt werden.

Umgekehrt kann es auch erwünscht sein, Signale von den Kunden-Endgeräten an der zentralen Einrichtung zu empfangen. Aktuell gibt es beispielsweise vermehrte Anstrengungen, die automatisierte Messung des Stromverbrauchs (Smart Metering) im Bereich der Privathaushalte einzuführen. Die individuellen Verbrauchsdaten müssen abhörsicher, manipulationssicher und mit hoher Zuverlässigkeit übertragen werden. Aus Gründen der Wirtschaftlichkeit und wegen gesetzlicher Strahlungsbeschränkungen ist es allgemein nicht erwünscht, an jedem der zahlreichen Kunden-Endgeräte eine Sendeeinrichtung mit hoher Leistung vorzusehen, um die Daten an die zentrale Einrichtung zu übermitteln. Bestehende Systeme zum Managen einer Vielzahl von Kunden-Endgeräten sind daher entweder hinsichtlich der Übertragungsrate, des Ansprechverhaltens, der Datensicherheit oder der Systemkosten nachteilig und können beispielsweise ein effizientes Last-, Tarif- oder Verbrauchsmanagement für weitläufige Verteilungen von Endgeräten nicht bewerkstelligen.

In der WO 02/37227 A ist ein Vorauszahlungssystem für Versorgungsresourcen, wie Strom, Gas oder Wasser, offenbart. Eine zentrale Steuereinheit schaltet beispielsweise über eine Funkverbindung den Anschluss eines Kunden frei und sperrt diesen nach Erreichen eines bestimmten Verbrauchs wieder. Ein mit dem Anschluss verbundener Verbrauchszähler sendet die Verbrauchsdaten über eine Trägerfrequenzverbindung an die zentrale Steuereinheit.

Die DE 10 2004 053 709 A1 offenbart eine Vorrichtung zur Fernsteuerung von elektrischen Verbrauchern, wie zum Beispiel Straßenlaternen. Die Vorrichtung ist jeweils einem Verbraucher zugeordnet und umfasst einen Rundsteuerempfänger zum Empfangen von Schaltbefehlen sowie ein Kommunikationsmodul, das in der Lage ist, über einen Rückmeldungskanal Zustandsinformationen an eine zentrale Steuerungseinheit zu übermitteln.

Die Aufgabe der Erfindung besteht darin, ein effizientes Last-, Tarif- oder Verbrauchsmanagement für eine große Anzahl von Endgeräten zu ermöglichen.

Diese Aufgabe wird durch ein Verfahren mit den Merkmalen des Anspruchs 1 sowie durch ein Managementsystem, das gemäß dem Verfahren betreibbar ist, gelöst.

Erfindungsgemäß sendet die Zentraleinheit mittels wenigstens eines Langwellensenders über einen zentralen Funk-Rundersteuerungskanal zumindest ein synchrones Funk-Steuertelegramm an mehrere Kunden-Verbindungseinheiten. Jede Kunden-Verbindungseinheit löst in Abhängigkeit von dem empfangenen Funk-Steuertelegramm bei wenigstens einem zugehörigen Kunden-Endgerät einen vordefinierten Vorgang aus. Jede Kunden-Verbindungseinheit übermittelt ferner über einen von dem Funk-Rundsteuerungskanal getrennten, dezentralen Rückkanal zumindest ein Datentelegramm, welches auf das zugehörige Kunden-Endgerät bezogene Information umfasst, an die Zentraleinheit. Die Übermittlung des Datentelegramms an die Zentraleinheit erfolgt zeitorientiert, ereignisorientiert und/oder abhängig von einem zuvor empfangenen Funk-Steuertelegramm.

Erfindungsgemäß erfolgt die Übermittlung der Datentelegramme von den Kunden-Verbindungseinheiten an die Zentraleinheit mit einer zeitlichen Verzögerung in Bezug auf das zuvor von den Kunden-Verbindungseinheiten empfangene Funk-Steuertelegramm. Die Verzögerungszeit kann beispielsweise für einen bestimmten Anwendungsfall angepasst sein, während nach wie vor eine synchronisierte Auslösung der Datenübermittlung mittels des synchronen Funk-Steuertelegramms sichergestellt ist.

Durch das Bereitstellen eines zentralen Funk-Rundsteuerungskanals kann die Zentraleinheit mehrere der Kunden-Endgeräte synchronisiert ansteuern, ohne dass nennenswerte Verzögerungszeiten zwischen Senden und Empfang zu erwarten sind. Mittels des dezentralen Rückkanals können die Kunden-Endgeräte auf einfache, sichere, flexible und kostensparende Weise Daten an die Zentraleinheit übermitteln, beispielsweise über ein einfach zu implementierendes PLC-System. Somit ist es z.B. möglich, dass die Zentraleinheit zu einem festgelegten Zeitpunkt eine koordinierte Verbrauchsdatenerfassung bei zahlreichen Endgeräten auslöst und die entsprechenden Daten nach und nach empfängt, um sie zu einem späteren Zeitpunkt weiter zu verarbeiten.

Durch die Erfindung werden somit in vorteilhafter Weise das Prinzip der Funk-Rundsteuerung, die sich insbesondere durch ihre zentralisierte Struktur und ihre Schnelligkeit auszeichnet, und einer im Gegensatz dazu dezentralen Datenübermittlung, bei der es auf Schnelligkeit und Synchronisation nicht ankommt, miteinander verknüpft. Der besondere Vorteil dieser Verknüpfung liegt darin, dass gerade die Vorteile der Systeme genutzt werden und etwaige Nachteile der Systeme keine Rolle spielen.

Mögliche Weiterbildungen der Erfindung sind in den abhängigen Ansprüchen, der Zeichnung sowie der Beschreibung angegeben.

Vorzugsweise beruht der dezentrale Rückkanal auf den Netzen bzw. Protokollen PLC, GSM, GPRS, UMTS, TCP und/oder IP. Diese bestehenden Kommunikationsstandards bzw. die zugehörige bereits bestehende Infrastruktur können in vorteilhafter Weise genutzt werden und stellen eine Kompatibilität zu anderen Anwendungen her.

Gemäß einer zweckmäßigen Ausgestaltung der Erfindung beruht der dezentrale Rückkanal auf wenigstens einem zellulären Funknetz. Mittels derartiger Funknetze können maßgeschneiderte und flexible Kommunikationsstrukturen aufgebaut werden.

Vorzugsweise wird die Übermittlung des Datentelegramms über den dezentralen Rückkanal mittels eines Korrelationsverfahrens unempfindlich gegenüber Störsignalen gemacht. Diese Vorgehensweise ermöglicht es, die Sendeeinrichtungen der Kunden-Verbindungseinheiten mit relativ geringer Leistung zu betreiben.

Gemäß einer Ausführungsform der Erfindung wird das Senden des Funk-Steuertelegramms über den zentralen Funk-Rundsteuerungskanal mittels eines Korrelationsverfahrens unempfindlich gegenüber Störsignalen gemacht. Dadurch kann die Robustheit der Signalübertragung über den zentralen Funk-Rundsteuerungskanal erhöht werden. Derartige Verfahren haben sich in der Radioastronomie auch bei extrem hoher Störumgebung bewährt. Dieses Verfahren ermöglicht daher eine Erhöhung der Zuverlässigkeit und/oder die Erhöhung der Reichweite des Langwellensenders. Die derzeitige bekannte Technik mit einer FSK-Modulation wird heute nicht so sehr durch die Empfangsauflösung der eingesetzten Empfänger (Eingangsrauschen), sondern weitgehend durch das Stör-/Nutzverhältnis begrenzt. Daher hat man hohe Pegel als Grenzwerte gewählt, die sicher über den Pegeln der Störumgebung liegen. Mit den Mitteln der Korrelation kann man diese Grenze deutlich nach unten korrigieren, was eine höhere Reichweite oder einen besseren Empfang an schwierigen Standorten, z.B. in Schaltkästen, ermöglicht.

Vorzugsweise umfasst das synchrone Funk-Steuertelegramm Steueranweisungen mit hoher Zeitpriorität. Dadurch können die Vorteile der schnellen Funk-Rundsteuerung in besonderem Maße genutzt werden.

Besonders bevorzugt umfasst das Funk-Steuertelegramm zusätzlich Informationsdaten. Somit können auch bestimmte, für nur ein Kunden-Endgerät relevante Informationen, beispielsweise Vertragsinformationen, oder für mehrere Kunden-Endgeräte gleichermaßen relevante Informationen, beispielsweise ein Zeitzeichen, Tarifinformationen, Wetterdaten, Alarmmeldungen und dergleichen, an die Kunden-Verbindungseinheiten übermittelt werden.

Vorzugsweise werden die Daten des Datentelegramms in Ansprechen auf ein empfangenes Funk-Steuertelegramm erfasst und bis zur Übermittlung an die Zentraleinheit in einer dem jeweiligen Kunden-Endgerät zugeordneten Speichereinrichtung gespeichert, wobei den erfassten Daten ein Zeitstempel hinzugefügt wird, der eine nachträgliche zeitliche Zuordnung der Daten ermöglicht. Dieses Vorgehen zieht einen besonderen Nutzen aus der hohen Redundanz und Zuverlässigkeit des erfindungsgemäßen Systems und Verfahrens, wodurch wesentliche zentrale Aufgaben unabhängig von den Eigenschaften und der Verfügbarkeit des Rückkanals gesteuert werden können. Damit wird auch insbesondere die Reorganisation aller Daten auf ein von einer Atomuhr synchron getaktetes System möglich, unabhängig davon, ob der Rückkanal funktioniert oder nicht. Damit kann man mit heute preiswerten statischen Speichersystemen eine minutengenaue Zuordnung des Verbrauchs auch nach Monaten oder Jahren ermöglichen. Die Zuverlässigkeit eines Billing-Systems, welches nicht nur auf die Fähigkeit eines funktionierenden Systems setzt, lässt sich so um ein Vielfaches steigern und Latenzen bis in den Bereich von Monaten lassen sich überbrücken.

Vorzugsweise wird mittels des zentralen Funk-Rundsteuerungskanals und des dezentralen Rückkanals ein die Kunden-Endgeräte bzw. mit den Kunden-Endgeräten verbundene Einrichtungen einbeziehendes Last-, Tarif-, Verbrauchs- und/oder Informationsmanagement durchgeführt. Ein derartiges integriertes Management ermöglicht dem Betreiber eines Endgerätenetzes vielfältige Optionen für einen effizienten und wirtschaftlichen Betrieb.

Eine zweckmäßige Ausgestaltung der Erfindung sieht vor, dass die Kunden-Endgeräte bzw. mit den Kunden-Endgeräten verbundene Einrichtungen aufgrund des synchronen Funk-Steuertelegramms ein- oder ausgeschaltet werden.

Vorzugsweise wird in Abhängigkeit von dem empfangenen Funk-Steuertelegramm eine an dem Kunden-Endgerät vorgesehene insbesondere optische Anzeigevorrichtung zur Darstellung von auf das Kunden-Endgerät bezogenen Informationen aktiviert oder aktualisiert. Dies schafft beispielsweise die Möglichkeit, einen Kunden regelmäßig über seine aktuellen Verbrauchsdaten zu informieren und ihm so die Gelegenheit zu geben, sein Verbrauchsverhalten zu überprüfen und/oder zu ändern.

Gemäß einer bevorzugten Ausführungsform der Erfindung umfassen die Kunden-Endgeräte Verbrauchserfassungs-, Leistungserfassungs- und/oder Schaltvorrichtungen für Versorgungseinrichtungen, wie z.B. Strom-, Wasser- und Wärmeversorgungseinrichtungen. Bei den Erfassungsvorrichtungen kann es sich beispielsweise um Stromzähler für häusliche Stromanschlüsse handeln, bei denen ein erfindungsgemäßes Management die Vorraussetzungen für ein effizientes Smart Metering schafft.

Bevorzugt löst das synchrone Funk-Steuertelegramm bei den Kunden-Endgeräten eine zeitsynchronisierte Erfassung, insbesondere eine Leistungsdatenerfassung, aus. Eine zeitsynchronisierte Leistungsdatenerfassung stellt sicher, dass keiner der Kunden hinsichtlich unterschiedlicher Tarifzeiträume oder Abrechnungsintervalle benachteiligt wird.

Gemäß einer bevorzugten Ausführungsform löst das synchrone Funk-Steuertelegramm bei den Kunden-Endgeräten eine Tarifumstellung aus. Dadurch ist es z.B. möglich, einen tagesaktuellen Strompreis festzulegen und die diesbezüglichen Einstellungen am Stromzähler passend zu ändern. Tagesaktuelle Beschaffungspreise des Energiehändlers können so direkt auf Kundenseite abgebildet und entsprechende Produkte angeboten werden.

Gemäß einer zweckmäßigen Ausgestaltung der Erfindung löst das synchrone Funk-Steuertelegramm bei den Kunden-Endgeräten bzw. bei mit den Kunden-Endgeräten verbundenen Einrichtungen eine Abschaltung im Rahmen eines Lastmanagements aus. Dadurch kann beispielsweise bei drohender Überlastung des Stromnetzes eine gezielte Abschaltung einzelner Verbraucher durch ein Energieversorgungsunternehmen veranlasst werden, um so einen Zusammenbruch des Gesamtnetzes zu verhindern. Die Abschaltung kann dabei auch von einer zuvor abgegebenen Rückmeldung der entsprechenden Kunden-Verbindungseinheit abhängig gemacht werden.

Die Erfindung wird im Folgenden beispielhaft unter Bezugnahme auf die Zeichnung beschrieben.

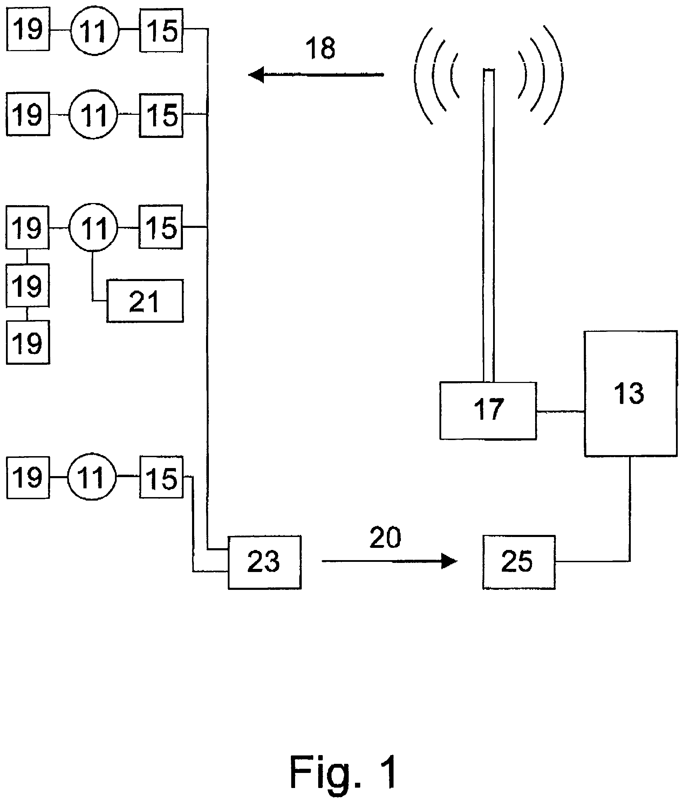

- Fig. 1: ist eine schematische Darstellung eines erfindungsgemäßen Managementsystems.

Das in Fig. 1 dargestellte Managementsystem umfasst eine Zentraleinheit 13, der ein Langwellensender 17 und eine Empfangseinrichtung 25 zugeordnet ist. Dabei können einer Zentraleinheit auch mehrere Langwellensender zugeordnet sein, und es ist auch möglich, mehrere Zentraleinheiten vorzusehen. Die Zentraleinheit 13 steuert eine Vielzahl von dezentralen Kunden-Endgeräten 11 über diesen zugeordnete Kunden-Verbindungseinheiten 15. Die Kunden-Verbindungseinheiten 15 sind zu diesem Zweck mit nicht dargestellten Empfangseinrichtungen versehen, welche auf den Langwellensender 17 abgestimmt sind. Bei den Kunden-Endgeräten 11 kann es sich um Strom-, Gas- oder Wasserzähler handeln. Es kann auch sein, dass einer Kunden-Verbindungseinheit 15 jeweils mehrere Kunden-Endgeräte 11 zugeordnet sind, beispielsweise jeweils ein Zähler für den Strom-, Gas- und Wasseranschluss. Die den Kunden-Endgeräten 11 zugeordneten Verbrauchseinrichtungen, bei welchen es sich um elektrische Verbraucher, Straßenbeleuchtungsanlagen, Heizungseinrichtungen oder dergleichen handeln kann, sind in der Figur mit 19 bezeichnet. Einige oder alle Kunden-Endgeräte 11 können mit einer Anzeigevorrichtung 21, beispielsweise einem Bildschirm oder einer Leuchtanzeige, versehen sein, um auf das jeweilige Kunden-Endgerät 11 bezogene Informationen darzustellen.

Das zentral organisierte Management des Netzes oder der Verteilung aus Kunden-Endgeräten 11 erfolgt über eine bidirektionale Kommunikationsverbindung zwischen der Zentraleinheit 13 und den Kunden-Verbindungseinheiten 15, wobei die Zentraleinheit 13 mittels eines langwellenbasierten Funk-Rundsteuerungsverfahrens synchrone Funk-Steuertelegramme 18 an die Kunden-Verbindungseinheiten 15 sendet. Die Zentraleinheit 13 kann dabei ein Funk-Steuertelegramm 18 senden, das von jeder Kunden-Verbindungseinheit 15 empfangen wird, oder sie kann ein Funk-Steuertelegramm 18 an eine bestimmte Untergruppe der Kunden-Verbindungseinheiten 15 senden, indem z.B. dem Funk-Steuertelegramm 18 eine entsprechende Kennung vorangestellt wird oder die Wellenlänge des gesendeten Signals an die Empfangseinrichtungen der Untergruppe angepasst wird.

In Abhängigkeit von dem empfangenen Funk-Steuertelegramm 18 löst jede Kunden-Verbindungseinheit 15 bei wenigstens einem zugehörigen Kunden-Endgerät 11 einen vordefinierten Vorgang aus. Ferner übermittelt jede Kunden-Verbindungseinheit 15 über einen Rückkanal zumindest ein Datentelegramm 20 an die Zentraleinheit 13. Die Übermittlung des Datentelegramms 20 an die Zentraleinheit 13 kann zeitorientiert erfolgen, also z.B. zu vordefinierten Zeiten auf Basis einer dem jeweiligen Kunden-Endgerät 11 oder der jeweiligen Kunden-Verbindungseinheit 15 zugeordneten Uhr. Alternativ kann die Übermittlung des Datentelegramms 20 auch ereignisorientiert erfolgen, beispielsweise bei Vorliegen einer Störung. Es ist auch möglich, dass die Übermittlung des Datentelegramms 20 abhängig von einem, insbesondere unmittelbar, zuvor empfangenen Funk-Steuertelegramm 18 erfolgt und somit eine, insbesondere prompte, Rückmeldung der jeweiligen Kunden-Verbindungseinheit 15 darstellt.

Der Rückkanal ist dezentral organisiert und von dem Funk-Rundsteuerungskanal getrennt. Er kann auf der bestehenden Infrastruktur eines PLC-Netzes beruhen. Alternativ oder zusätzlich können für den dezentralen Rückkanal auch andere Übertragungsformen, z.B. GSM, GPRS, UMTS, TCP, IP oder eine Kombination davon zur Anwendung kommen. Es ist auch möglich, für den dezentralen Rückkanal ein zelluläres Funknetz (Mesh Radio) einzusetzen. Auf die genaue Konfiguration des Rückkanals kommt es nicht an, da keine kritischen Parameter hinsichtlich der Datenrate oder der Übertragungszeit zu erfüllen sind und die erforderliche Gleichzeitigkeit der Ansteuerung durch die zentrale Funk-Rundsteuerung gewährleistet ist. Um den Datenschutz in Bezug auf persönliche Verbrauchsdaten sicherzustellen, werden die Datentelegramme (20) vorzugsweise verschlüsselt übertragen. Ferner wird die Übermittlung der Datentelegramme (20) über den dezentralen Rückkanal mittels eines geeigneten Korrelationsverfahrens unempfindlich gegenüber Störsignalen gemacht. Dies ist problemlos möglich, da die Bandbreite der Datenübertragung von den Kunden-Verbindungseinheiten 15 an die Zentraleinheit 13 üblicherweise gering ist. Bei einer Zählerstandsablesung kann es beispielsweise ausreichen, die Daten einmal pro Monat zu erfassen.

Bei der dargestellten beispielhaften Konfiguration senden die Kunden-Verbindungseinheiten 15 die Informationsdaten an eine Zwischenstation 23. Wie dargestellt, können die Kunden-Verbindungseinheiten 15 direkt oder über eine oder mehrere andere Kunden-Verbindungseinheiten 15 mit der Zwischenstation 23 in Verbindung stehen. Die Zwischenstation 23 sendet die Informationsdaten an die Empfangseinrichtung 25 der Zentraleinheit 13. Alternativ ist es auch möglich, dass die Kunden-Verbindungseinheiten 15 ohne Verwendung einer Zwischenstation direkt mit der Empfangseinrichtung 25 in Verbindung stehen. Dies gilt insbesondere für den Fall eines GSM-, GPRS- oder UMTS-basierten Rückkanals.

Ferner ist es auch möglich, den dezentralen Rückkanal basierend auf den Netzen bzw. Protokollen PLC, GSM, GPRS, UMTS, TCP und/oder IP bidirektional auszuführen. Auf diese Weise wird für die Erreichbarkeit der Kunden-Verbindungseinheiten 15 zusätzlich und unabhängig vom zentralen Funk-Rundsteuerungskanal eine redundante Kommunikationsverbindung geschaffen.

Mittels des dargestellten Systems kann in Bezug auf die Einrichtungen 19 insbesondere ein integriertes Last-, Tarif-, Verbrauchs- und/oder Informationsmanagement durchgeführt werden. Beispielsweise wird durch Aussenden eines Funk-Steuertelegramms 18 zu einem vorgegebenen Zeitpunkt eine Verbrauchsdatenerfassung der Kunden-Endgeräte 11 ausgelöst. Die Zentraleinheit kann Zugriff auf ein Zeitnormal haben und das Funk-Steuertelegramm 18 mit den entsprechenden Signalen gekoppelt sein, so dass sich eine zeitlich exakt koordinierte Datenablesung ergibt. Aufgrund des Funk-Steuertelegramms 18 erfassen alle Kunden-Endgeräte 11 die momentanen Verbrauchsdaten der entsprechenden Einrichtungen 19. Die diesbezüglichen Daten werden dann über den dezentralen Rückkanal an die Zwischenstation 23 und weiter an die Empfangseinrichtung 25 der Zentraleinheit 13 übermittelt. Die Zentraleinheit 13 übernimmt die Weiterverarbeitung, Sicherung und Aufbereitung der Daten. Die Weiterverarbeitung der Daten in der Zentraleinheit 13 kann bedeutend später als die Ablesung stattfinden, beispielsweise erst bei Rechnungsstellung. Das Funk-Steuertelegramm 18, welches die Erfassung auslöst, oder ein davon getrenntes Funk-Steuertelegramm 18, das zu einem anderen Zeitpunkt gesendet wird, können auch jeweils zusätzliche Informationsdaten enthalten, welche von den Kunden-Endgeräten 11 verarbeitet werden. Beispielsweise kann es für ein Kunden-Endgerät 11 wichtig sein, ein Zeitsignal zu empfangen oder mit aktuellen Wetterdaten versorgt zu werden. Sofern das Kunden-Endgerät 11 eine Anzeigevorrichtung 21 aufweist, können die empfangenen Informationsdaten und/oder weitere interne Daten auf der Anzeigevorrichtung angezeigt werden.

Sofern die Kunden-Endgeräte 11 Schalteinrichtungen sind, kann durch selektives An- oder Abschalten ein aktives Lastmanagement realisiert werden. Bei drohender Überlastung des Gesamtnetzes sendet die Zentraleinheit 13 ein Steuertelegramm 18 an bestimmte Kunden-Verbindungseinheiten 15, um über das zugeordnete Kunden-Endgerät 11 eine Abschaltung der jeweiligen Einrichtung 19 zu veranlassen. Es ist auch möglich, dass die Abschaltung von einer vorherigen Rückmeldung der jeweiligen Kunden-Verbindungseinheit 15 abhängig gemacht wird. Beispielsweise gibt die Zentraleinheit 13 über das Funk-Steuertelegramm 18 die Nachricht aus, dass ein Weiterbetrieb der entsprechenden Einrichtung 19 nur zu einem höheren Tarif möglich ist. Das dem jeweiligen Kunden-Endgerät 11 zugeordnete Verbindungsgerät 15 meldet dann der Zentraleinheit 13 über den dezentralen Rückkanal, ob ein Weiterbetrieb der Einrichtung 19 zu einem höheren Tarif in Frage kommt. Ein derartiges Lastmanagement eignet sich insbesondere für kleinere zusammengefasste Kraftwerkseinheiten (virtuelles Kraftwerk).

In ähnlicher Weise kann durch ein einzelnes synchronisiertes Funk-Steuertelegramm 18 bei einer Vielzahl von Kunden-Endgeräten 11 eine Tarifumstellung ausgelöst werden. Der Kunde kann mittels der Anzeigevorrichtung 21 stets zeitnah über seine aktuellen Verbrauchsdaten und den momentan gültigen Tarif informiert werden.

Es ist daher erfindungsgemäß möglich, mit den beschriebenen Prinzipien auf Basis bereits existierender und erprobter Infrastruktur ein integriertes Last-, Tarif-, Verbrauchs-, Daten- und Erzeugungsmanagement (Wind-kraftanlagen, virtuelle Kraftwerke, Brennstoffzellen, Kleinkraftwerke) für großflächige dezentrale Verteilungen oder Netze, wie beispielsweise das Netz der privaten Stromkunden, zu schaffen.

Ebenso ist es möglich, die in der Zentraleinheit 13 aufbereiteten Daten den Kunden zu Informationszwecken zugänglich zu machen, beispielsweise über ein Internet-Portal.

### Bezugszeichenliste

- 11: Kunden-Endgerät
- 13: Zentraleinheit
- 15: Kunden-Verbindungseinheit
- 17: Langwellensender
- 18: Funk-Steuertelegramm
- 19: Einrichtung
- 20: Datentelegramm
- 21: Anzeigevorrichtung
- 23: Zwischenstation
- 25: Empfangseinrichtung

## Patentansprüche

1. Verfahren zum Managen einer Vielzahl von dezentralen Kunden-Endgeräten (11) mittels einer bidirektionalen Kommunikationsverbindung zwischen einer Zentraleinheit (13) und den Kunden-Endgeräten (11) zugeordneten Kunden-Verbindungseinheiten (15),
wobei die Zentraleinheit (13) mittels wenigstens eines Langwellensenders (17) über einen zentralen Funk-Rundsteuerungskanal zumindest ein synchrones Funk-Steuertelegramm (18) an mehrere Kunden-Verbindungseinheiten (15) sendet,
wobei jede Kunden-Verbindungseinheit (15) in Abhängigkeit von dem empfangenen Funk-Steuertelegramm (18) bei wenigstens einem zugehörigen Kunden-Endgerät (11) einen vordefinierten Vorgang auslöst und
wobei jede Kunden-Verbindungseinheit (15) über einen von dem Funk-Rundsteuerungskanal getrennten, dezentralen Rückkanal zumindest ein Datentelegramm (20), welches auf das zugehörige Kunden-Endgerät (11) bezogene Informationen umfasst, an die Zentraleinheit (13) übermittelt,
wobei die Übermittlung des Datentelegramms (20) an die Zentraleinheit (13) zeitorientiert, ereignisorientiert und/oder abhängig von einem zuvor empfangenen Funk-Steuertelegramm (18) erfolgt,
**dadurch gekennzeichnet,**
**dass** die Übermittlung der Datentelegramme (20) von den Kunden-Verbindungseinheiten (15) an die Zentraleinheit (13) mit einer zeitlichen Verzögerung in Bezug auf das zuvor von den Kunden-Verbindungseinheiten (15) empfangene Funk-Steuertelegramm (18) erfolgt, wobei die Verzögerungszeit anpassbar ist.

2. Verfahren nach Anspruch 1,
**dadurch gekennzeichnet,**
**dass** der dezentrale Rückkanal auf den Netzen bzw. Protokollen PLC, GSM, GPRS, UMTS, TCP und/oder IP beruht.

3. Verfahren nach Anspruch 1,
**dadurch gekennzeichnet,**
**dass** der dezentrale Rückkanal auf wenigstens einem zellulären Funknetz beruht.

4. Verfahren nach einem der vorhergehenden Ansprüche,
**dadurch gekennzeichnet,**
**dass** die Übermittlung des Datentelegramms (20) über den dezentralen Rückkanal mittels eines Korrelationsverfahrens unempfindlich gegenüber Störsignalen gemacht wird.

5. Verfahren nach einem der vorhergehenden Ansprüche,
**dadurch gekennzeichnet,**
**dass** das Senden des Funk-Steuertelegramms (18) über den zentralen Funk-Rundsteuerungskanal mittels eines Korrelationsverfahrens unempfindlich gegenüber Störsignalen gemacht wird.

6. Verfahren nach einem der vorhergehenden Ansprüche,
**dadurch gekennzeichnet,**
**dass** das synchrone Funk-Steuertelegramm (18) Steueranweisungen mit hoher Zeitpriorität umfasst.

7. Verfahren nach einem der vorhergehenden Ansprüche,
**dadurch gekennzeichnet,**
**dass** das synchrone Funk-Steuertelegramm (18) zusätzlich Informationsdaten umfasst.

8. Verfahren nach einem der vorhergehenden Ansprüche,
**dadurch gekennzeichnet,**
**dass** die Daten des Datentelegramms (20) in Ansprechen auf ein empfangenes Funk-Steuertelegramm (18) erfasst und bis zur Übermittlung an die Zentraleinheit (13) in einer dem jeweiligen Kunden-Endgerät (11) zugeordneten Speichereinrichtung gespeichert werden, wobei den erfassten Daten ein Zeitstempel hinzugefügt wird, der eine nachträgliche zeitliche Zuordnung der Daten ermöglicht.

9. Verfahren nach einem der vorhergehenden Ansprüche,
**dadurch gekennzeichnet,**
**dass** mittels des zentralen Funk-Rundsteuerungskanals und des dezentralen Rückkanals ein die Kunden-Endgeräte (11) bzw. mit den Kunden-Endgeräten (11) verbundene Einrichtungen (19) einbeziehendes Last-, Tarif-, Verbrauchs- und/oder Informationsmanagement durchgeführt wird.

10. Verfahren nach einem der vorhergehenden Ansprüche,
**dadurch gekennzeichnet,**
**dass** die Kunden-Endgeräte (11) bzw. mit den Kunden-Endgeräten (11) verbundene Einrichtungen (19) aufgrund des synchronen Funk-Steuertelegramms (18) ein- oder ausgeschaltet werden.

11. Verfahren nach einem der vorhergehenden Ansprüche,
**dadurch gekennzeichnet,**
**dass** in Abhängigkeit von dem empfangenen Funk-Steuertelegramm (18) eine an dem Kunden-Endgerät (11) vorgesehene insbesondere optische Anzeigevorrichtung (21) zur Darstellung von auf das Kunden-Endgerät (11) bezogenen Informationen aktiviert oder aktualisiert wird.

12. Verfahren nach einem der vorhergehenden Ansprüche,
**dadurch gekennzeichnet,**
**dass** die Kunden-Endgeräte (11) Leistungserfassungs- und/oder Schaltvorrichtungen für Versorgungseinrichtungen, wie z.B. Strom-, Wasser und Wärmeversorgungseinrichtungen, umfassen.

13. Verfahren nach einem der vorhergehenden Ansprüche,
**dadurch gekennzeichnet,**
**dass** das synchrone Funk-Steuertelegramm (18) bei den Kunden-Endgeräten (11) eine zeitsynchronisierte Datenerfassung, insbesondere eine Leistungsdatenerfassung, auslöst.

14. Verfahren nach einem der vorhergehenden Ansprüche,
**dadurch gekennzeichnet,**
**dass** das synchrone Funk-Steuertelegramm (18) bei den Kunden-Endgeräten (11) eine Tarifumstellung auslöst.

15. Verfahren nach einem der vorhergehenden Ansprüche,
**dadurch gekennzeichnet,**
**dass** das synchrone Funk-Steuertelegramm (18) bei den Kunden-Endgeräten (11) bzw. bei mit den Kunden-Endgeräten (11) verbundenen Einrichtungen (19) eine Abschaltung oder eine Einschaltung im Rahmen eines Lastmanagements auslöst.

16. Managementsystem für eine Vielzahl von Kunden-Endgeräten (11), das gemäß einem Verfahren nach einem der vorhergehenden Ansprüche betreibbar ist.

## Claims

1. A method for the management of a plurality of decentralized customer terminals (11) by means of a bidirectional communications connection between a central unit (13) and customer connection units (15) associated with the customer terminals (11),
wherein the central unit (13) transmits at least one synchronous radio control telegram (18) to a plurality of customer connection units (15) by means of at least one longwave transmitter (17) via a central radio ripple control channel;
wherein each customer connection unit (15) triggers a predefined process at at least one associated customer terminal (11) in dependence on the received radio control telegram (18);
wherein each customer connection unit (15) transmits at least one data telegram (20) which includes information related to the associated customer terminal (11) to the central unit (13) via a decentralized return channel which is separate from the radio ripple control channel; and
wherein the transmission of the data telegram (20) to the central unit (13) takes place based on time, based on an event and/or in dependence on a previously received radio control telegram (18),
**characterized in that**
the transmission of the data telegrams (20) from the customer connection units (15) to the central unit (13) takes place with a time delay with respect to the radio control telegram (18) previously received by the customer connection units (15), with the delay time being adaptable.

2. A method in accordance with claim 1,
**characterized in that**
the decentralized return channel is based on the networks or protocols PLC, GSM, GPS, UMTS, TCP and/or IP.

3. A method in accordance with claim 1,
**characterized in that**
the decentralized return channel is based on at least one cellular radio network.

4. A method in accordance with any one of the preceding claims,
**characterized in that**
the transmission of the data telegram (20) via the decentralized return channel is made insensitive with respect to interference signals by means of a correlation process.

5. A method in accordance with any one of the preceding claims,
**characterized in that**
the transmission of the radio control telegram (18) via the central radio ripple control channel is made insensitive with respect to interference signals by means of a correlation process.

6. A method in accordance with any one of the preceding claims,
**characterized in that**
the synchronous radio control telegram (18) includes control instructions with high time priority.

7. A method in accordance with any one of the preceding claims,
**characterized in that**
the synchronous radio control telegram (18) additionally includes information data.

8. A method in accordance with any one of the preceding claims,
**characterized in that**
the data of the data telegram (20) are logged in response to a received radio control telegram (18) and are stored in a memory device associated with the respective customer terminal (11) until the transmission to the central unit (13), with a time stamp being added to the logged data which enables a subsequent time association of the data.

9. A method in accordance with any one of the preceding claims,
**characterized in that**
management of load, tariff, consumption and/or information including the customer terminals (11) or devices (19) associated with the customer terminals (11) is carried out by means of the central radio ripple control channel and the decentralized return channel.

10. A method in accordance with any one of the preceding claims,
**characterized in that**
the customer terminals (11) or devices (19) associated with the customer terminals (11) are switched on or off in dependence on the synchronous radio control telegram (18).

11. A method in accordance with any one of the preceding claims,
**characterized in that**
a display device (21), in particular an optical display device, provided at the customer terminal (11) for the display of information related to the customer terminal (11) is activated or updated in dependence on the received radio control telegram (18).

12. A method in accordance with any one of the preceding claims,
**characterized in that**
the customer terminals (11) include power logging devices and/or switching devices for supply devices such as electrical supply devices, water supply devices and heat supply devices.

13. A method in accordance with any one of the preceding claims,
**characterized in that**
the synchronous radio control telegram (18) triggers a time-synchronized data logging, in particular a power data logging, in the customer terminals (11).

14. A method in accordance with any one of the preceding claims,
**characterized in that**
the synchronous radio control telegram (18) triggers a change in tariff at the customer terminals (11).

15. A method in accordance with any one of the preceding claims,
**characterized in that**
the synchronous radio control telegram (18) triggers a switching off or a switching on within the framework of load management in the customer terminals (11) or the devices (19) associated with the customer terminals (11).

16. A management system for a plurality of customer terminals (11) which is operable in accordance with a method in accordance with any one of the preceding claims.

## Revendications

1. Procédé de gestion d'une pluralité de terminaux clients (11) décentralisés au moyen d'une liaison de communication bidirectionnelle entre une unité centrale (13) et des unités de liaison clients (15) associées aux terminaux clients (11), dans lequel l'unité centrale (13) envoie au moins un télégramme de commande radio synchrone (18) à plusieurs unités de liaison clients (15) au moyen d'au moins un émetteur à longues ondes (17), par l'intermédiaire d'un canal de commande radio centralisé,
dans lequel chaque unité de liaison client (15) déclenche une procédure prédéfinie en fonction du télégramme de commande radio (18) reçu pour au moins un terminal client (11) associé, et
dans lequel chaque unité de liaison client (15) transmet à l'unité centrale (13) au moins un télégramme de données (20), lequel comprend des informations concernant le terminal client (11) associé, par l'intermédiaire d'un canal de retour décentralisé, séparé du canal de commande radio centralisé,
dans lequel la transmission du télégramme de données (20) à l'unité centrale (13) s'effectue de manière orientée dans le temps, orientée par rapport à l'événement et/ou en fonction d'un télégramme de commande radio (18) préalablement reçu,
**caractérisé en ce que** la transmission des télégrammes de données (20) des unités de liaison clients (15) à l'unité centrale (13) s'effectue avec un décalage dans le temps par rapport au télégramme de commande radio (18) préalablement reçu par les unités de liaison clients (15), le décalage dans le temps pouvant être adapté.

2. Procédé selon la revendication 1, **caractérisé en ce que** le canal de retour décentralisé repose sur les réseaux ou les protocoles PLC, GSM, GPRS, UMTS, TCP et/ou IP.

3. Procédé selon la revendication 1, **caractérisé en ce que** le canal de retour décentralisé repose sur au moins un réseau de radiocommunication cellulaire.

4. Procédé selon l'une quelconque des revendications précédentes, **caractérisé en ce que** la transmission du télégramme de données (20) par l'intermédiaire du canal de retour décentralisé est rendue insensible aux signaux parasites au moyen d'un procédé de corrélation.

5. Procédé selon l'une quelconque des revendications précédentes, **caractérisé en ce que** l'émission du télégramme de commande radio (18) par l'intermédiaire du canal de commande radio centralisé est rendue insensible aux signaux parasites au moyen d'un procédé de corrélation.

6. Procédé selon l'une quelconque des revendications précédentes, **caractérisé en ce que** le télégramme de commande radio synchrone (18) comprend des instructions de commande à priorité temporelle élevée.

7. Procédé selon l'une quelconque des revendications précédentes, **caractérisé en ce que** le télégramme de commande radio synchrone (18) comprend en plus des données d'information.

8. Procédé selon l'une quelconque des revendications précédentes, **caractérisé en ce que** les données du télégramme de données (20) sont acquises en réponse à un télégramme de commande radio (18) reçu et mises en mémoire dans un dispositif mémoire associé au terminal client (11) respectif jusqu'à leur transmission à l'unité centrale (13), dans lequel un horodatage qui permet une association temporelle ultérieure des données, est ajouté aux données acquises.

9. Procédé selon l'une quelconque des revendications précédentes, **caractérisé en ce qu'**une gestion de la charge, du tarif, de la consommation et/ou des informations comprenant les terminaux clients (11) ou les systèmes (19) reliés aux terminaux clients (11) est réalisée au moyen du canal de commande radio centralisé et du canal de retour décentralisé.

10. Procédé selon l'une quelconque des revendications précédentes, **caractérisé en ce que** les terminaux clients (11) ou les systèmes (19) reliés aux terminaux clients (11) sont mis en service ou hors service sur la base du télégramme de commande radio synchrone (18).

11. Procédé selon l'une quelconque des revendications précédentes, **caractérisé en ce qu'**un dispositif d'affichage (21) en particulier optique, prévu sur le terminal client (11), et destiné à représenter des informations concernant le terminal client (11), est activé ou actualisé en fonction du télégramme de commande radio (18) reçu.

12. Procédé selon l'une quelconque des revendications précédentes, **caractérisé en ce que** les terminaux clients (11) comprennent des dispositifs d'acquisition de puissance et/ou des dispositifs de commande pour des systèmes d'alimentation, tels que par exemple des systèmes d'alimentation en courant, en eau et en chaleur.

13. Procédé selon l'une quelconque des revendications précédentes, **caractérisé en ce que** le télégramme de commande radio synchrone (18), pour les terminaux clients (11), déclenche une acquisition synchronisée dans le temps des données, en particulier une acquisition des données de puissance.

14. Procédé selon l'une quelconque des revendications précédentes, **caractérisé en ce que** le télégramme de commande radio synchrone (18), pour les terminaux clients (11), déclenche un changement de tarif.

15. Procédé selon l'une quelconque des revendications précédentes, **caractérisé en ce que** le télégramme de commande radio synchrone (18), pour les terminaux clients (11) ou pour les systèmes (19) reliés aux terminaux clients (11), déclenche une mise hors service ou une mise en service dans le cadre d'une gestion de charge.

16. Système de gestion pour une pluralité de terminaux clients (11), qui peut fonctionner selon un procédé selon l'une quelconque des revendications précédentes.
